# EUROPEAN PATENT SPECIFICATION

(11) **EP 1 760 974 B1**
(45) Date of publication and mention of the grant of the patent: **06.08.2008**
(21) Application number: 06018358.9
(22) Date of filing: 01.09.2006
(51) Int. Cl.: H04L 12/58

(54) **A method, system and terminal for implementing information transfer services**
Verfahren, System und Endgerät zur Implementierung von Informationsübertragungsdiensten
Procédé, système et terminal pour implémenter des services de transfert d'information

(30) Priority: 01.09.2005 CN 200510098209
(43) Date of publication of application: 07.03.2007
(73) Proprietor: Huawei Technologies Co., Ltd., Shenzhen 518129 Guangdong (CN)
(72) Inventor: Li, Dawei, District Shenzhen 518129 Guangdong (CN)
(74) Representative: Manitz, Finsterwald & Partner GbR

(56) References cited:
- EP-A- 1 562 342
- WO-A-20/04080094
- US-A1- 2004 162 871
- "Digital cellular telecommunications system (Phase 2+)" ETSI STANDARDS, EUROPEAN TELECOMMUNICATIONS STANDARDS INSTITUTE, SOPHIA-ANTIPO, FR, vol. 3-T2, no. V6100, June 2005 (2005-06), XP014030495 ISSN: 0000-0001

## Description

### Field of the invention

The present invention relates to the field of information transfer technique in a wireless communication system, and more particularly, to a system, method and terminal for implementing information transfer services.

### Background of the invention

Multimedia Message Service (MMS) is a further evolution of Short Message Service (SMS) and Enhanced Message Service (EMS), which provides an integrated end-to-end solution for personal multimedia mobile communication services. In terms of communication contents, a multimedia message may include pictures, voices, video, data, and etc.

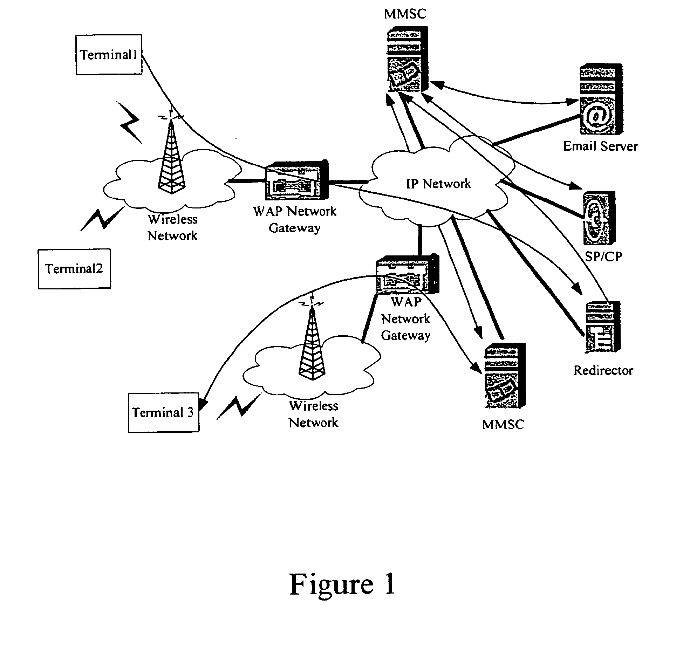

The architecture of a system for implementing an MMS, email service and MMS value-added service is shown in Figure 1, in which the most important entities for implementing MMS include MMS User Agents (UA) and MMS Centers (MMSC). An MMS UA is an application module at a terminal. The module may be used for browsing, editing, and processing MMS messages in addition to transferring and receiving MMS messages as an agent of a user. An MMSC has functions of an MMS relay and an MMS Server for implementing protocol transformation, content adaptation, storage, and scheduling of MMS messages, and carrying out the delivering operation of MMS messages between different multimedia devices. Besides the MMS UA and MMSC, the system may further include an MMS database, an email server, an external value-added application server, e.g., Service Provider /Content Provider (SP/CP), Redirector, etc. The MMS database may be for storing user information, customized information, interface information, etc; the email server may be for providing email services for terminals; the SP/CP may be for providing MMS value-added service; and the Redirector may be for redirecting MSS messages between the MSS UA and MMSC such that the terminal may be able to allocate a submitted message to the terminal's home MMSC without being configured with a fixed MMSC address.

In the prior art, a first Patent document, WO 2004/080094 A, discloses a method for delivery of MMS messages, and a second Patent document, EP-A-1562342, discloses a method of processing a multimedia message sent by a telecommunications terminal of one party to a telecommunications terminal of a recipient. Additionally, the description of Multimedia Messaging Service is provided in "Digital cellular telecommunications system (Phase 2+)" ETSI STANDARDS, vol.3-T2, no.V6100, XP014030495.

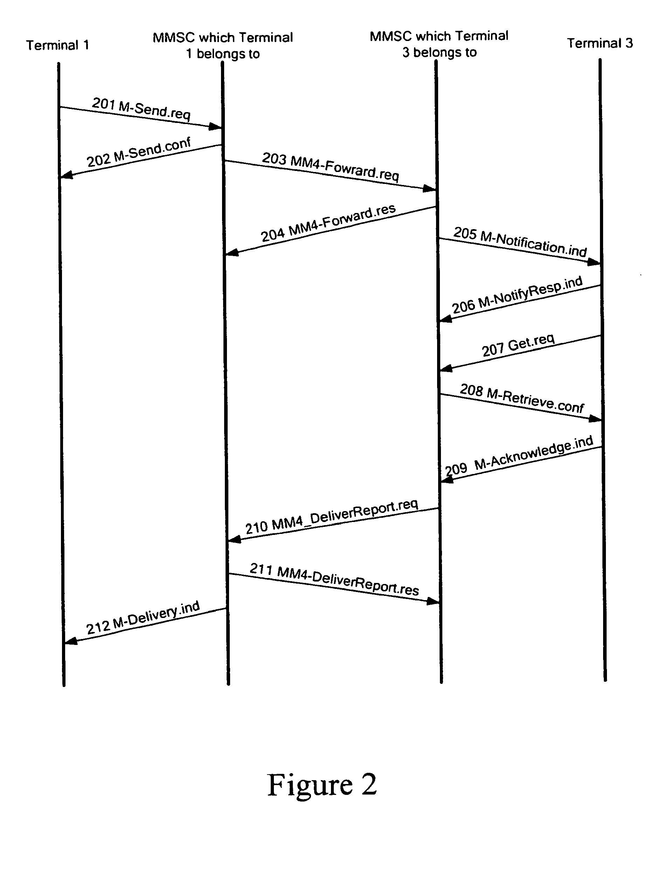

A flowchart for implementing an MMS service in the related art is shown in Figure 2. Supposing that the sending terminal is terminal 1 and the receiving terminal is terminal 3, the flowchart includes the following specific steps:
Step 201: after constructing an MMS message, terminal 1 sends the constructed MMS message to its home MMSC via an M-Send.req message.
Step 202: after the MMSC to which terminal 1 belongs receives the MMS message, it returns an M-Send.conf message to terminal 1 so as to confirm that this MMS message has been received;
Step 203: the MMSC to which terminal 1 belongs transfers the MMS message to an MMSC of the receiving party, i.e., the MMSC to which terminal 3 belongs, via an MM4-Forward.req message.
Step 204: after the MMSC to which terminal 3 belongs receives this MMS message, it returns an MM4-Forward.res message to the MMSC to which terminal 1 belongs so as to confirm that the message has been received;
Step 205: the MMSC to which terminal 3 belongs sends to terminal 3 an M-Notification.ind message in a form of a short message;
Step 206: after terminal 3 receives the M-Notification.ind message, it returns an M-NotifyResp.ind message to the MMSC which terminal 3 belongs to;
Step 207: a while later, terminal 3 confirms that the MMS message has been received, and then sends a Get.req message to the MMSC which terminal 3 belongs to;
Step 208: after receiving the Get.req message, the MMSC to which terminal 3 belongs delivers the corresponding message to terminal 3 via an M-Retrieve.conf message;
Step 209: after downloading the MMS message successfully, terminal 3 sends its home MMSC an M-Acknowledge.ind message so as to inform the MMSC that the download of this MMS message is done;
Step 210: after the MMSC to which terminal 3 belongs receives the M-Acknowledge.ind message sent by terminal 3, the MMSC sends an MM4-DeliverReport.req message to the MMSC terminal 1 belongs to, informing the MMSC that terminal 3 has received the MMS message;
Step 211: the MMSC to which terminal 1 belongs sends an MM4-DeliverReport.res message to the MMSC which terminal 3 belongs to, confirming that it has received a Delivery Report and notifying that it has learned that terminal 3 has received the MMS message;
Step 212: the MMSC to which terminal 1 belongs sends an M-Delivery ind message to terminal 1, notifying terminal 1 that terminal 3 has accomplished receiving the MMS message.

Like the transferring method of the MMS, when a terminal sends an email to an email server or an MMS value-added service message to an SP/CP, it is necessary in the related art to send the email or MMS value-added service message to an MMSC first, and then the MMSC sends the email or MMS value-added service message to the corresponding email server or SP/CP.

As seen from the foregoing schemes, in the related art process of a terminal implementing the information transfer services such as the MMS, email service, and MMS value-added service, the information has to be forwarded by an MMSC. So each MMSC has to transfer such a large amount of information that each MMSC is required to have more powerful processing abilities, which increases the system costs for implementing MMS services. If the network needs to accommodate large numbers of subscribers, it is necessary to set up more MMSCs to satisfy the demands, which leads to a big waste of devices;

Furthermore, as MMS messages need to be transferred via multiple network elements, and there may be call loss on each network element, the success rate of MMS transfer is made relatively low. Besides, as the MMSC is needed to implement the transfer of messages of MMS email, and MMS value-added service, the complexity and maintenance costs of communication networks will inevitably increase, and particularly, when the system is being updated, transportation and cutover of lots of data have to be carried out.

### Summary

The present invention discloses a method for implementing information transfer services, applied to a communication system including a sending terminal, a network gateway, and a receiving unit, including:
generating, by the sending terminal, an address comprising both an IP address of the sending terminal and an identifier configured on the sending terminal of a multimedia message to be sent; sending, by the sending terminal, the address to the receiving unit via the network gateway; and obtaining, by the receiving unit, the multimedia message via the network gateway from the sending terminal according to the address.

The present invention further discloses a system for implementing information transfer services, including:
a sending terminal, configured to generate an address comprising both an IP address of the sending terminal and an identifier configured on the sending terminal of a multimedia message to be sent, and send the address to a receiving unit via a network gateway; the network gateway, configured to receive the address from the sending terminal, and send the address to the receiving unit, and the receiving unit, configured to, via the network gateway, receive the address sent by the sending terminal and obtain the multimedia message from the sending terminal according to the address.

The present invention further discloses a terminal, including:
a Multimedia Message Service (MMS) User Agent (UA), configured to generate an address comprising both an IP address of the terminal and an identifier configured on the sending terminals of a multimedia message to be sent, contain the address in a WAP PUSH message, output the WAP PUSH message to a Wireless Application Protocol (WAP) interface, and send the multimedia message to the WAP interface; and the WAP interface, configured to receive the WAP PUSH message from the MMS UA, send the WAP PUSH message to a WAP network gateway, and transfer the multimedia message from the MMS UA to the WAP network gateway.

As seen from the foregoing solution, in this invention, a sending terminal generates an address of the information to be sent, sends the address to a receiving device of the information via a WAP PUSH short message, then obtains the information from the sending terminal according to the received address, and finally accomplishes the current information transfer service. In the course of information transfer, as information is not transferred via a high-cost MMSC, the cost of implementing information transfer services is reduced, the complexity of the system for implementing information transfer services is decreased, and the maintenance cost for realizing such a system is decreased as well. In addition, since MM exchanging between terminals can be realized directly without MMSCs, the number of network elements for implementing MMS is reduced so that the success rate of transferring MMs increases. Similarly, for the email service and EMS, the number of network elements for carrying out such services can be reduced, and the success rate of transferring information of such services can increase.

### Brief description of the drawings

The accompanying drawings, which are incorporated in and constitute a part of this specification, illustrate the invention and together with the description, and serve to explain the principles of the invention.

In the drawings,
Figure 1 is an architecture map of a system for implementing an MMS service, email service, and MMS value-added service in the related art;
Figure 2 is a flowchart of implementing the MMS service in the related art;
Figure 3 is a general flowchart of a method for implementing information transfer services according to a preferred embodiment of the present invention;
Figure 4 is an architecture map for implementing MMS services according to a preferred embodiment of the invention;
Figure 5 is a flowchart of implementing MMS services according to an preferred embodiment of the invention;
Figure 6 is a flowchart of implementing email services according to an preferred embodiment of the invention; and
Figure 7 is a flowchart of implementing MMS value-added service according to a preferred embodiment of the invention.

### Detailed description of preferred embodiments

To make the objective, technique schemes and advantages of this invention clearer, this invention is further described in detail hereinafter with reference to the accompanying drawings.

An embodiment of the invention is that, a sending terminal generates an address for information which is to be sent and sends the address to a receiving device of the information, and then the receiving device obtains the information from the sending terminal according to the received address. In this way, an information transfer service is realized. Here, the sending terminal may send the address of the information to the receiving device via a Wireless Application Protocol PUSH (WAP PUSH) short message.

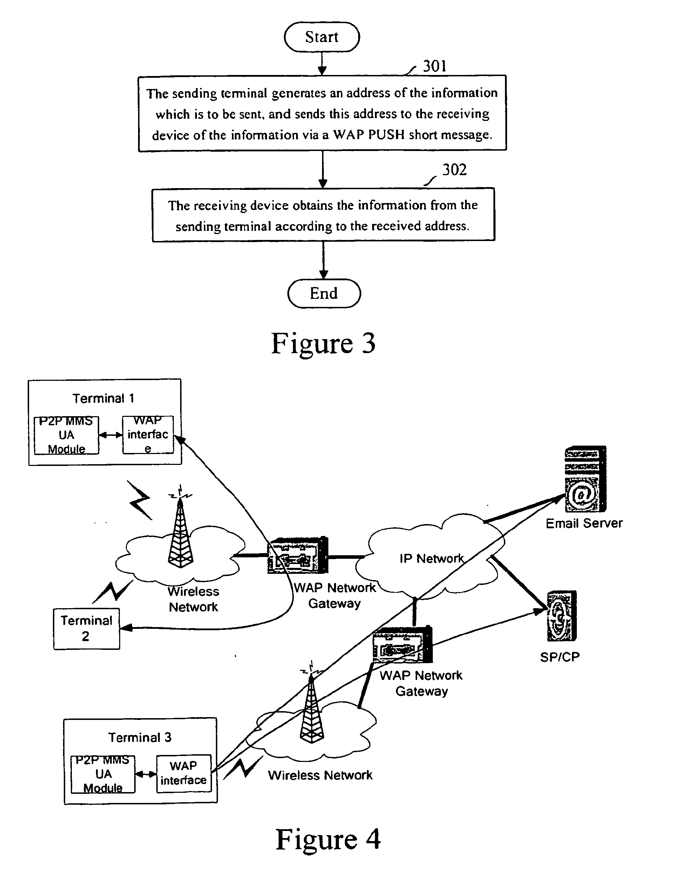

The general flowchart of a method for implementing information transfer services according to a preferred embodiment of the present invention is shown in Figure 3. The method includes the following steps:
Step 301: a sending terminal generates an address for information which is to be sent, and sends this address to a receiving device of the information via a WAP PUSH short message.
Step 302: the receiving device obtains the information from the sending terminal according to the received address.

Detailed descriptions of this invention are provided by embodiments as follows.

As shown in Figure 4, architecture of a system for implementing an MMS service, mail service, and MMS value-added service in an embodiment of this invention includes: terminal 1, terminal 2, terminal 3, wireless networks, WAP network gateways, an IP network, a mail server, and an SP/CP.

Terminal 1 contains a point-to-point (P2P) MMS UA module and a WAP interface module. The P2P MMS UA module can be for providing functions of browsing, editing, and processing MMS for users, sending an M-Notification.ind message to terminal 2, and sending an MMS message to terminal 2 after receiving a Get.req message sent by terminal 2. The method of the P2P MMS UA module providing functions of browsing, editing, and processing MMS for users may be the same as the one in the related art. The WAP interface module may be for establishing a connection with a WAP network gateway so that the P2P MMS UA module may exchange information with the WAP network gateway via the established connection.

Terminal 2 may be either a terminal containing a P2P MMS UA module or the same terminal as the one in the related art, and it may be for receiving an MMS message from terminal 1 via the WAP network gateway after receiving an M-Notification.ind message from terminal 1.

The wireless network, WAP network gateway, and IP network are for providing network services for terminal 1 and/or terminal 2, and for transferring messages between terminal 1 and terminal 2.

The email server and SP/CP are for getting the corresponding information according to the address contained in the WAP PUSH short message sent by a terminal.

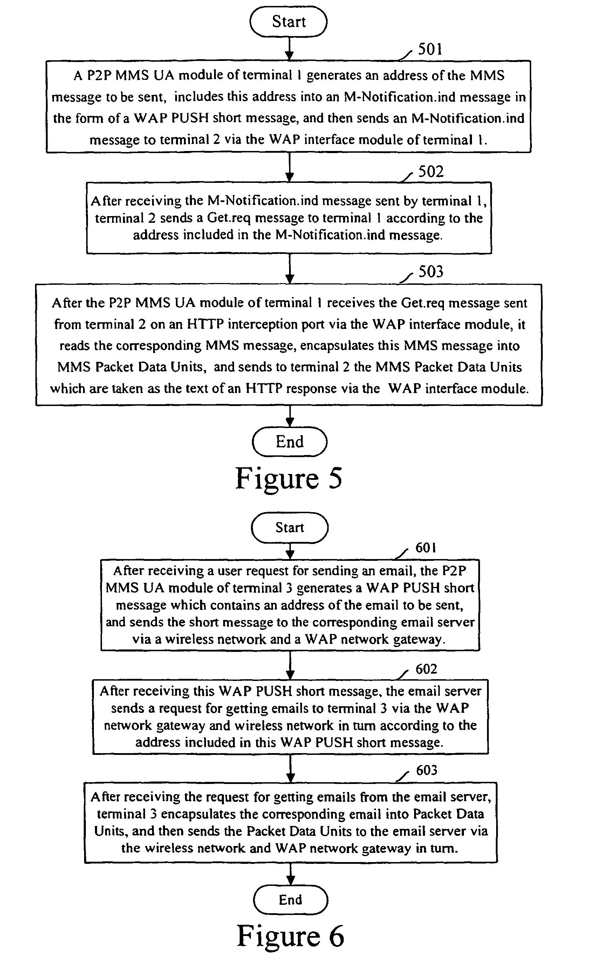

In the foregoing system, the procedure of terminal 1 sending an MMS message to terminal 2 is shown in Figure 5. As the messages exchanged between terminal 1 and terminal 2 are first sent to the WAP network gateway by the sending terminal via the wireless network, then sent to the receiving terminal by the WAP network gateway via the wireless network gateway. Moreover, the realization of transferring information between terminals via the wireless network and WAP network gateway may be the same as that in the related art, so for brevity, the message exchanging between terminals via the wireless network and WAP network gateway in the following steps are directly described by the interaction between the terminals while the process of the wireless network and WAP network gateway is omitted. The procedure includes the following steps:
Step 501: after receiving a P2P MMS request from a user, the P2P MMS UA module of terminal 1 generates an address for an MMS message which is to be sent, includes this address in an M-Notification.ind message in a format of a WAP PUSH short message, and then sends this message to terminal 2 via a WAP interface module.

In this step, generating an address for the MMS message which is to be sent refers to generating a link address of an M-Notification.ind message in a form of WAP PUSH, wherein the link address may be expressed as a Content Location, etc. In addition, the link address may be generated automatically according to the IP address allocated by the network side which may be obtained by the WAP interface module and the identifier of the MMS to be sent by a user which is configured on a terminal, e.g., HTTP://10.11.22.33:8080/12345, wherein HTTP://10.11.22.33 is the IP address of the terminal sending the MMS, 8080 refers to an interception port, and 12345 is the identifier of the MMS message configured on terminal 1.

In addition, in this step, if there are abundant IP resources in the network where terminal 1 is located, it is possible to make the terminal on line permanently. For instance, in an IPV6 network, as terminal 1 may own an IP address without application, its Hypertext Transfer Protocol (HTTP) service interception may start directly, and thus this step may be performed directly. However, if it is needed to allocate resources dynamically in the network where terminal 1 is located, e.g., in a GPRS network, before generating an M-Notification.ind message, terminal 1 needs to send a request for activating a GPRS context to the network side via a WAP interface first; and after the network side receives the request for activating a GPRS context, it opens a data network channel for terminal 1, activates a GPRS context, allocates an IP address for terminal 1, then sends the IP address to the WAP interface module in terminal 1, and after allocating an interception port, the WAP interface module in terminal 1 starts an HTTP interception on this IP address.
Step 502: after receiving the M-Notification.ind message sent by terminal 1, terminal 2 sends a Get.req message to terminal 1 according to the link address included in the M-Notification.ind message, such as a Content Location.
Step 503: after the P2P MMS UA module of terminal 1 receives the Get.req message from terminal 2 on the HTTP interception port via the WAP interface module, it reads the corresponding MMS message, encapsulates this MMS message into MMS Packet Data Units, and sends an M-Retrieve.conf message as the text of an HTTP response to terminal 2 via the WAP interface module.

In step 503, if the network where terminal 1 is located needs to allocate IP address resources dynamically, after finishing sending the MMS message, the WAP interface module in terminal 1 needs to disconnect the HTTP data link, deactivate the data link, and release the network resources such as the IP address etc. Since there is a confirmation mechanism for the reception of data packages in the Transportation Control Protocol (TCP) of the HTTP, after the WAP interface module makes sure that terminal 2 has finished receiving data packages based on the confirmation mechanism, it is confirmed that terminal 2 has finished sending the MMS message.

In this embodiment, information server addresses may be set in a P2P MMS UA module as well, thus terminal 1 may be able to receive MMS messages from a related art terminal, of which the specific implementing procedure is the same as the flowchart shown in Figure 2, so it is not necessary here to give a further description about this procedure.

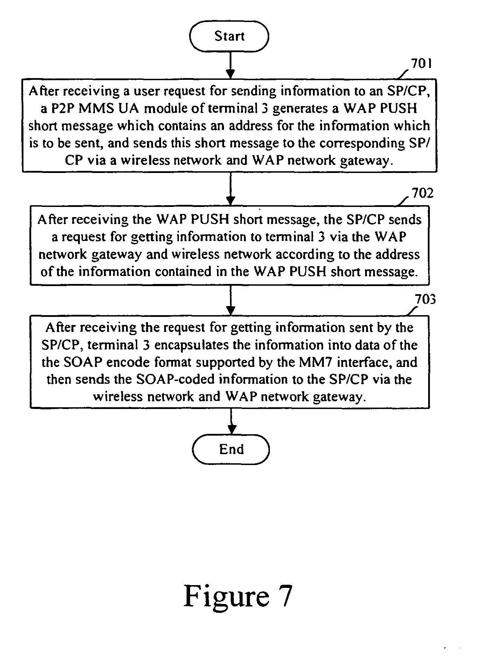

In this embodiment, the terminal with a P2P MMS UA module may also implement sending emails to an email server or MMS value-added service messages to an SP/CP. The procedures of terminal 3 in Figure 4 sending an email to an email server and sending an MMS value-added service message to an SP/CP are illustrated in Figure 6 and Figure 7, respectively.

Figure 6 is a flow chart of implementing email services in an embodiment of this invention. As shown in Figure 6, the procedure of terminal 3 sending an email to an email server includes:
Step 601: after receiving a user request for sending an email, the P2P MMS UA module of terminal 3 generates a WAP PUSH short message which contains an address of an email to be sent, and sends the short message to the corresponding email server via a wireless network and WAP network gateway. Similar to Step 501, the address of the email mentioned in this step includes: an IP address and interception port of terminal 3, and an identifier of this email configured on terminal 3.
Step 602: after receiving this WAP PUSH short message, the email server sends a request for getting an email to terminal 3 via the WAP network gateway and wireless network in turn according to the address included in this WAP PUSH short message.
Step 603: after receiving the request for getting an email from the email server, terminal 3 encapsulates the corresponding email into Packet Data Units, and then sends the Packet Data Units to the email server via the wireless network and WAP network gateway in turn.

Figure 7 is a flow chart of implementing MMS value-added service in an embodiment of the invention. As shown in Figure 7, the procedure of terminal 3 sending an MMS value-added service message to an SP/CP includes:
Step 701: after receiving a user request for sending information to an SP/CP, the P2P MMS UA module of terminal 3 generates a WAP PUSH short message which contains an address of information to be sent, and sends this short message to the corresponding SP/CP via a wireless network and WAP network gateway. Similar to Step 501 and Step 601, the address of the information mentioned above contains: an IP address and interception port of terminal 3, and an identifier of the information to be sent configured on terminal 3.
Step 702: after receiving the WAP PUSH short message, the SP/CP sends to terminal 3 a request for getting the information via the WAP network gateway and wireless network according to the address of the information contained in the WAP PUSH short message.
Step 703: after receiving the request for getting information sent by the SP/CP, terminal 3 carries out Simple Object Access Protocol (SOAP) encoding for the information to be sent by a user to the SP/CP in a format of an MM7-Submit.req message, i.e., encapsulates this information into data of a SOAP encode format supported by the MM7 interface, and then sends the SOAP encode information to the corresponding SP/CP via the wireless network and WAP network gateway.

The foregoing is a description of embodiments of this invention. Proper modifications may be conducted on the method during specific implementations of this invention so as to accommodate the needs of specific situations. Therefore, it is easy to understand that the embodiments based upon the invention are for demonstrations rather than for limiting the protection scope of the invention.

## Claims

1. A method for implementing information transfer services, **characterized by** comprising:
generating, by a sending terminal, an address comprising both an IP address of the sending terminal and an identifier configured on the sending terminal of a multimedia message to be sent;
sending, by the sending terminal, the address to a receiving unit via a network gateway; and
obtaining, by the receiving unit, the multimedia message via the network gateway from the sending terminal according to the address.

2. The method according to Claim 1, wherein the network gateway is a Wireless Application Protocol, WAP, network gateway, and the sending, by the sending terminal, the address to the receiving unit via the network gateway comprises:
generating, by the sending terminal, a WAP PUSH message which contains the address; and
pushing, by the sending terminal, the WAP PUSH message via the WAP network gateway to the receiving unit.

3. The method according to Claim 1, wherein the obtaining the multimedia message via the network gateway from the sending terminal according to the address comprises:
sending, by the receiving unit, a request for getting the multimedia message to the sending terminal via the network gateway based on the address received; and
upon receiving the request for getting the multimedia message, sending, by the sending terminal, the multimedia message to the receiving unit via the network gateway.

4. The method according to Claim 3, wherein
the sending the request for getting the multimedia message to the sending terminal based on the address received comprises: sending, by the receiving unit, the request for getting the multimedia message according to the IP address of the sending terminal contained in the address received, and carrying, by the receiving unit, the identifier of the multimedia message in the sending terminal in the request for getting the multimedia message, and
the sending the multimedia message to the receiving unit comprises: getting, by the sending terminal, the multimedia message according to the identifier of the multimedia message carried in the request for getting the multimedia message and sending the multimedia message to the receiving unit.

5. The method according to Claims 3 or 4, further comprising: carrying out, by the sending terminal, a format transformation for the multimedia message to be sent before sending the multimedia message to the receiving unit.

6. The method according to Claim 5, wherein
if the multimedia message to be sent is a Multimedia Message Service, MMS, message, the receiving unit is a terminal; and if the multimedia message to be sent is an email, the receiving unit is an email server; and
the format transformation for the multimedia message comprises encapsulating the multimedia message into Packet Data Units.

7. The method according to Claim 5, wherein the multimedia message to be sent is a Multimedia Message Service, MMS, value-added service message, and the receiving unit is an external value-added application server; and
the format transformation for the multimedia message comprises encapsulating the multimedia value-added service message into data of a Simple Object Access Protocol, SOAP, encode format supported by the MM7 interface.

8. The method according to Claim 4, wherein the address further comprises an interception port for intercepting the IP address of the sending terminal.

9. A system for implementing information transfer services, **characterized by** comprising:
a sending terminal, configured to generate an address comprising both an IP address of the sending terminal and an identifier configured on the sending terminal of a multimedia message to be sent, and send the address to a receiving unit via a network gateway;
the network gateway, configured to receive the address from the sending terminal, and send the address to the receiving unit, and
the receiving unit, configured to, via the network gateway, receive the address sent by the sending terminal and obtain the multimedia message from the sending terminal according to the address.

10. The system according to Claim 9, wherein, the network gateway is a Wireless Application Protocol, WAP, network gateway;
the sending terminal is further configured to include the generated address in a WAP PUSH message and send the WAP PUSH message to the WAP network gateway;
the WAP network gateway is further configured to receive the WAP PUSH message containing the address from the sending terminal and push the WAP PUSH message to the receiving unit; and
the receiving unit is further configured to receive the WAP PUSH message containing the address from the WAP network gateway and analyze the WAP PUSH message to get the address.

11. The system according to Claim 9, wherein
the receiving unit is further configured to send a request for getting the multimedia message to the sending terminal via the network gateway after receiving the address; and
the sending terminal is further configured to send the multimedia message to the receiving unit via the network gateway after receiving the request for getting the multimedia message.

12. A terminal, **characterized by** comprising:
a Multimedia Message Service User Agent, MMS UA, configured to generate an address comprising both an IP address of the terminal and an identifier configured on the sending terminal of a multimedia message to be sent, contain the address in a Wireless Application Protocol, WAP, PUSH message, output the WAP PUSH message to a WAP interface, and send the multimedia message to the WAP interface; and
the WAP interface, configured to receive the WAP PUSH message from the MMS UA, send the WAP PUSH message to a WAP network gateway, and transfer the multimedia message from the MMS UA to the WAP network gateway.

## Patentansprüche

1. Verfahren zum Realisieren von Informationstransferdiensten, **dadurch gekennzeichnet, dass**
durch ein sendendes Endgerät eine Adresse erzeugt wird, die sowohl eine IP-Adresse des sendenden Endgeräts als auch einen an dem sendenden Endgerät konfigurierten Identifikator einer zu sendenden Multimedianachricht umfasst;
durch das sendende Endgerät die Adresse über ein Netz-Gateway an eine empfangende Einheit gesendet wird; und
durch die empfangende Einheit die Multimedianachricht über das Netz-Gateway von dem sendenden Endgerät gemäß der Adresse erhalten wird.

2. Verfahren nach Anspruch 1, wobei das Netz-Gateway ein Wireless Application Protocol-Netz-Gateway, WAP-Netz-Gateway, ist, und das Senden der Adresse durch das sendende Endgerät an die empfangende Einheit über das Netz-Gateway umfasst, dass
durch das sendende Endgerät eine WAP PUSH-Nachricht erzeugt wird, die die Adresse enthält; und
durch das sendende Endgerät die WAP PUSH-Nachricht über das WAP-Netz-Gateway an die empfangende Einheit geleitet wird.

3. Verfahren nach Anspruch 1, wobei das Erhalten der Multimedianachricht über das Netz-Gateway von dem sendenden Endgerät gemäß der Adresse umfasst, dass
durch die empfangende Einheit über das Netz-Gateway auf der Grundlage der empfangenen Adresse eine Anforderung zum Erlangen der Multimedianachricht an das sendende Endgerät gesendet wird; und
beim Empfangen der Anforderung zum Erlangen der Multimedianachricht durch das sendende Endgerät über das Netz-Gateway die Multimedianachricht an die empfangende Einheit gesendet wird.

4. Verfahren nach Anspruch 3, wobei
das Senden der Anforderung zum Erlangen der Multimedianachricht an das sendende Endgerät auf der Grundlage der empfangenen Adresse umfasst, dass durch die empfangende Einheit die Anforderung zum Erlangen der Multimedianachricht gemäß der IP-Adresse des sendenden Endgeräts, die in der empfangenen Adresse enthalten ist, gesendet wird, und durch die empfangende Einheit der Identifikator der Multimedianachricht in dem sendenden Endgerät in der Anforderung zum Erlangen der Multimedianachricht getragen wird, und
das Senden der Multimedianachricht an die empfangende Einheit umfasst, dass die Multimedianachricht gemäß dem Identifikator der Multimedianachricht, der in der Anforderung zum Erlangen der Multimedianachricht getragen ist, durch das sendende Endgerät erlangt wird und die Multimedianachricht an die empfangende Einheit gesendet wird.

5. Verfahren nach Anspruch 3 oder 4, das ferner umfasst, dass durch das sendende Endgerät eine Formatumwandlung für die zu sendende Multimedianachricht ausgeführt wird, bevor die Multimedianachricht an die empfangende Einheit gesendet wird.

6. Verfahren nach Anspruch 5, wobei
wenn die zu sendende Multimedianachricht eine Multimedia Message Service-Nachricht, MMS-Nachricht, ist, die empfangende Einheit ein Endgerät ist; und wenn die zu sendende Multimedianachricht eine Email ist, die empfangende Einheit ein Email-Server ist; und
die Formatumwandlung für die Multimedianachricht umfasst, dass die Multimedianachricht in Packet Data Units verkapselt wird.

7. Verfahren nach Anspruch 5, wobei
die zu sendende Multimedianachricht eine Multimedia Message Service-Mehrwertdienst-Nachricht, MMS-Mehrwertdienst-Nachricht, ist, und die empfangende Einheit ein externer Mehrwert-Anwendungsserver ist; und
die Formatumwandlung für die Multimedianachricht umfasst, dass die Multimedia-Mehrwertdienst-Nachricht in Daten eines Simple Object Access Protocol-Codierungsformats, SOAP-Codierungsformats, verkapselt wird, das durch die MM7-Schnittstelle unterstützt wird.

8. Verfahren nach Anspruch 4, wobei die Adresse ferner einen Abfang-Port zum Abfangen der IP-Adresse des sendenden Endgeräts umfasst.

9. System zum Realisieren von Informationstransferdiensten, **gekennzeichnet durch**
ein sendendes Endgerät, das ausgestaltet ist, um eine Adresse zu erzeugen, die sowohl eine IP-Adresse des sendenden Endgeräts als auch einen an dem sendenden Endgerät konfigurierten Identifikator einer zu sendenden Multimedianachricht umfasst, und um die Adresse über ein Netz-Gateway an eine empfangende Einheit zu senden;
das Netz-Gateway, das ausgestaltet ist, um die Adresse von dem sendenden Endgerät zu empfangen und die Adresse an die empfangende Einheit zu senden, und
die empfangende Einheit, die ausgestaltet ist, um über das Netz-Gateway die **durch** das sendende Endgerät gesendete Adresse zu empfangen und die Multimedianachricht von dem sendenden Endgerät gemäß der Adresse zu erhalten.

10. System nach Anspruch 9, wobei
das Netz-Gateway ein Wireless Application Protocol-Netz-Gateway, WAP-Gateway, ist;
das sendende Endgerät ferner ausgestaltet ist, um die erzeugte Adresse in eine WAP PUSH-Nachricht einzubeziehen und die WAP PUSH-Nachricht an das WAP-Netz-Gateway zu senden;
das WAP-Netz-Gateway ferner ausgestaltet ist, um die WAP PUSH-Nachricht, die die Adresse enthält, von dem sendenden Endgerät zu empfangen und die WAP PUSH-Nachricht an die empfangende Einheit zu leiten; und
die empfangende Einheit ferner ausgestaltet ist, um die WAP PUSH-Nachricht, die die Adresse enthält, von dem WAP-Netz-Gateway zu empfangen und die WAP PUSH-Nachricht zu analysieren, um die Adresse zu erlangen.

11. System nach Anspruch 9, wobei
die empfangende Einheit ferner ausgestaltet ist, um nach dem Empfangen der Adresse eine Anforderung zum Erlangen der Multimedianachricht über das Netz-Gateway an das sendende Endgerät zu senden; und
das sendende Endgerät ferner ausgestaltet ist, um die Multimedianachricht nach dem Empfangen der Anforderung zum Erlangen der Multimedianachricht über das Netz-Gateway an die empfangende Einheit zu senden.

12. Endgerät, **gekennzeichnet durch**
einen Multimedia Message Service User Agent, MMS UA, der ausgestaltet ist, um eine Adresse zu erzeugen, die sowohl eine IP-Adresse des Endgeräts als auch einen an dem sendenden Endgerät konfigurierten Identifikator einer zu sendenden Multimedianachricht umfasst, die Adresse in eine Wireless Application Protocol PUSH-Nachricht, WAP PUSH-Nachricht, einzubeziehen, die WAP PUSH-Nachricht an eine WAP-Schnittstelle auszugeben und die Multimedianachricht an die WAP-Schnittstelle zu senden; und
die WAP-Schnittstelle, die ausgestaltet ist, um die WAP PUSH-Nachricht von dem MMS UA zu empfangen, die WAP PUSH-Nachricht an ein WAP-Netz-Gateway zu senden und die Multimedianachricht von dem MMS UA an das WAP-Netz-Gateway zu übertragen.

## Revendications

1. Procédé de mise en oeuvre de services de transfert d'informations, **caractérisé en ce qu'**il comprend les étapes consistant à :
produire sur un terminal émetteur une adresse comprenant à la fois une adresse IP du terminal émetteur et un identificateur, configuré sur le terminal émetteur, d'un message multimédia à émettre ;
émettre l'adresse par le terminal émetteur vers une unité de réception, via une passerelle de réseau ; et
obtenir le message multimédia par l'unité de réception, via la passerelle de réseau, à partir du terminal émetteur, en fonction de l'adresse.

2. Procédé selon la revendication 1, dans lequel la passerelle de réseau est une passerelle de réseau sous le protocole WAP, pour *« Wireless Application Protocol »* - Protocole applicatif sans fil, et l'étape d'émission de l'adresse par le terminal émetteur vers l'unité de réception, via la passerelle de réseau, comprend les étapes consistant à :
produire sur le terminal émetteur un message WAP PUSH qui contient l'adresse ; et
envoyer par le terminal émetteur le message WAP PUSH vers l'unité de réception, via la passerelle de réseau WAP.

3. Procédé selon la revendication 1, dans lequel l'étape d'obtention du message multimédia, via la passerelle de réseau, à partir du terminal émetteur, en fonction de l'adresse, comprend les étapes consistant à :
envoyer par l'unité de réception une demande d'obtention du message multimédia au terminal émetteur, sur la base de l'adresse reçue, via la passerelle de réseau ; et
à réception de la demande d'obtention du message multimédia, émettre le message multimédia par le terminal émetteur vers l'unité de réception, via la passerelle de réseau.

4. Procédé selon la revendication 3, dans lequel :
l'étape d'émission de la demande d'obtention du message multimédia vers le terminal émetteur sur la base de l'adresse reçue comprend les étapes consistant à émettre par l'unité de réception la demande d'obtention du message multimédia en fonction de l'adresse IP du terminal émetteur contenue dans l'adresse reçue et à placer par l'unité de réception dans la demande d'obtention du message multimédia l'identificateur du message multimédia dans le terminal émetteur ; et
l'étape d'envoi du message multimédia vers l'unité de réception comprend les étapes consistant à obtenir par le terminal émetteur le message multimédia en fonction de l'identificateur du message multimédia transporté dans la demande d'obtention du message multimédia et à envoyer le message multimédia à l'unité de réception.

5. Procédé selon la revendication 3 ou 4, comprenant en outre l'étape consistant à exécuter par le terminal émetteur une transformation de format du message multimédia à envoyer avant d'envoyer le message multimédia vers l'unité de réception.

6. Procédé selon la revendication 5, dans lequel :
si le message multimédia à envoyer est un message d'un Service de messages multimédia, MMS pour « *Multimedia Message Service »,* l'unité de réception est un terminal ; et si le message multimédia à envoyer est un courriel, l'unité de réception est un serveur de courriel ; et
la transformation de format du message multimédia comprend l'encapsulation du message multimédia dans des unités de données en paquets.

7. Procédé selon la revendication 5, dans lequel le message multimédia à envoyer est un message de service à valeur ajoutée, du Service de Messages Multimédia, MMS, et l'unité de réception est un serveur d'applications à valeur ajoutée extérieur ; et
la transformation de format du message multimédia comprend l'encapsulation du message MMS à valeur ajoutée dans des données d'un format de codage SOAP, pour « *Simple Object Access Protocol »* - Protocole simple d'accès aux objets, supporté par l'interface MM7.

8. Procédé selon la revendication 4, dans lequel l'adresse comprend en outre un port d'interception destiné à intercepter l'adresse IP du terminal émetteur.

9. Système de mise en oeuvre des services de transfert d'informations, **caractérisé en ce qu'**il comprend :
un terminal émetteur, configuré pour produire une adresse comprenant à la fois une adresse IP du terminal émetteur et un identificateur, configuré sur le terminal émetteur, d'un message multimédia à envoyer et pour envoyer l'adresse à une unité de réception via une passerelle de réseau ;
la passerelle de réseau, configurée pour recevoir l'adresse du terminal émetteur et pour envoyer l'adresse à l'unité de réception ; et
l'unité de réception, configurée pour recevoir via la passerelle de réseau l'adresse envoyée par le terminal émetteur et pour obtenir le message multimédia du terminal émetteur en fonction de l'adresse.

10. Système selon la revendication 9, dans lequel la passerelle de réseau est une passerelle de réseau WAP, pour *« Wireless Application Protocol » ;*
le terminal émetteur est en outre configuré pour inclure l'adresse produite dans un message WAP PUSH et pour envoyer le message WAP PUSH à la passerelle de réseau WAP ;
la passerelle de réseau WAP est en outre configurée pour recevoir du terminal émetteur le message WAP PUSH contenant l'adresse et pour envoyer le message WAP PUSH à l'unité de réception ; et
l'unité de réception est en outre configurée pour recevoir de la passerelle de réseau WAP le message WAP PUSH contenant l'adresse et pour analyser le message WAP PUSH afin d'obtenir l'adresse.

11. Système selon la revendication 9, dans lequel :
l'unité de réception est en outre configurée pour envoyer au terminal émetteur une demande d'obtention du message multimédia, via la passerelle de réseau, après avoir reçu l'adresse ; et
le terminal émetteur est en outre configuré pour envoyer le message multimédia à l'unité de réception via la passerelle de réseau après avoir reçu la demande d'obtention du message multimédia.

12. Terminal, **caractérisé en ce qu'**il comprend :
un agent utilisateur de Service de Messages Multimédia, MMS UA, pour *« Multimedia Message Service User Agent* », configuré pour produire une adresse comprenant à la fois une adresse IP du terminal et un identificateur, configuré sur le terminal émetteur, d'un message multimédia à envoyer, placer l'adresse dans un message WAP PUSH, envoyer le message WAP PUSH vers une interface WAP et envoyer le message multimédia vers l'interface WAP ; et
l'interface WAP, configurée pour recevoir le message WAP PUSH de l'agent MMS UA, envoyer le message WAP PUSH vers une passerelle de réseau WAP et transférer le message multimédia de l'agent MMS UA vers la passerelle de réseau WAP.
